# EUROPEAN PATENT APPLICATION

(11) **EP 0 944 060 A2**
(43) Date of publication of application: **22.09.1999**
(21) Application number: 99105284.6
(22) Date of filing: 15.03.1999
(51) Int. Cl.: G11B 15/665

(54) **Magnetic recording/reproduction apparatus**

(30) Priority: 19.03.1998 JP 7018198; 22.12.1998 JP 36452598
(71) Applicant: MATSUSHITA ELECTRIC INDUSTRIAL CO., LTD., Kadoma-shi, Osaka 571-8501 (JP)
(72) Inventor: Konishi, Akio, Sanda-shi, Hyogo-ken (JP); Hirabayashi, Koichiro, Hirakata-shi, Osaka (JP); Takahashi, Hisashi, Mitoyo-gun, Kagawa-ken (JP)
(74) Representative: Kügele, Bernhard

(57) **Abstract**

An apparatus of the present invention is a magnetic recording/reproduction apparatus for winding a magnetic tape around a rotary head cylinder, having a rotary head, for a predetermined arc, for recording/reproducing the magnetic tape. The magnetic recording/reproduction apparatus includes: a capstan shaft for driving the magnetic tape; and a pinch roller for pressing the magnetic tape against the capstan shaft. When the magnetic tape is being reproduced, the capstan shaft is rotated in a forward direction with the pinch roller pressing the magnetic tape against the capstan shaft. When a pause operation of pausing the reproduction of the magnetic tape is performed, a tension acting upon the magnetic tape is reduced.

## Description

### BACKGROUND OF THE INVENTION

### 1. FIELD OF THE INVENTION:

The present invention relates to a magnetic recording/reproduction apparatus.

### 2. DESCRIPTION OF THE RELATED ART:

A conventional magnetic recording/reproduction apparatus will be described below.

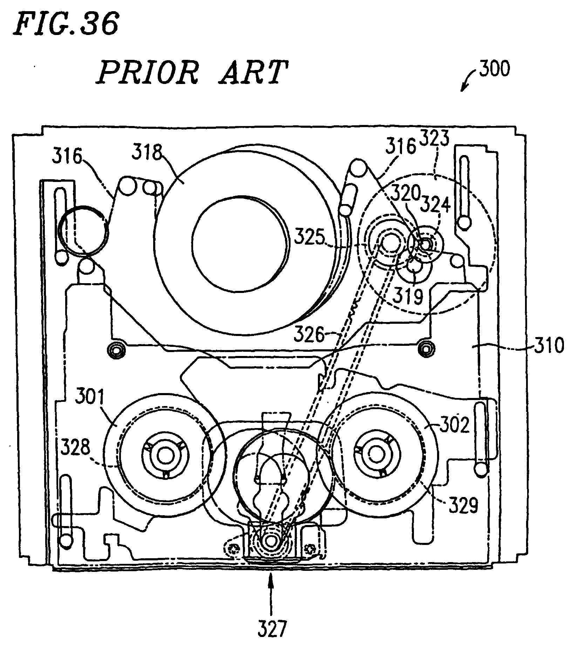

Figure **36** illustrates a conventional magnetic recording/reproduction apparatus **300** as disclosed in Japanese Laid-Open Utility Model Publication No. 61-195552.

Figure **36** illustrates an exemplary tape path of the conventional magnetic recording/reproduction apparatus **300** which pulls out a tape **316** from a tape cassette **310** and winds the tape **316** around a rotary head cylinder **318** for recording/reproducing the tape **316**.

A capstan motor **323** drives the tape **316** while pressing a pinch roller **319** against a capstan **320**.

A rotational driving force of the capstan motor **323** is transmitted to a sway gear set **327** via gears **324** and **325** and a timing belt **326**, and selectively to a driving gear **328** of an S reel base **301** or to a driving gear **329** of a T reel base **302**.

When the magnetic recording/reproduction apparatus **300** performs a recording/reproduction operation, the capstan motor **323** rotates in a counterclockwise direction at a predetermined speed, with the apparatus **300** being in the position as illustrated in Figure **36**, thereby driving the tape **316**. Thus, the tape **316** is fed from the S reel **301** side to the T reel **302** side, while being recorded/reproduced by the rotary head cylinder **318**.

In a typical pause operation of the magnetic recording/reproduction apparatus **300**, the capstan motor **323** rotating in the counterclockwise direction stops rotating without any reverse rotation, thereby resulting in a pause state with the pinch roller **319** being pressed against the capstan **320**.

In such a structure, a tension acting upon the tape **316** during the pause state is substantially the same as that during the reproduction operation, thereby consequently leaving the tape **316** being wound around the rotary head cylinder **318** with the tension acting thereupon. Under some conditions, when the tape **316** is left in this state for a prolonged period of time, a foreign substance such as a magnetic powder of the tape **316** may be attached to the rotary head mounted on the rotary head cylinder **318**, or the rotary head may seize, thereby resulting in a frozen state and thus disabling further magnetic recording/reproduction operations.

### SUMMARY OF THE INVENTION

According to one aspect of this invention, a magnetic recording/reproduction apparatus is provided for winding a magnetic tape around a rotary head cylinder, having a rotary head, for a predetermined arc, for recording/reproducing the magnetic tape. The magnetic recording/reproduction apparatus includes: a capstan shaft for driving the magnetic tape; and a pinch roller for pressing the magnetic tape against the capstan shaft. When the magnetic tape is being reproduced, the capstan shaft is rotated in a forward direction with the pinch roller pressing the magnetic tape against the capstan shaft. When a pause operation of pausing the reproduction of the magnetic tape is performed, a tension acting upon the magnetic tape is reduced.

According to another aspect of this invention, a magnetic recording/reproduction apparatus is provided for winding a magnetic tape around a rotary head cylinder, having a rotary head, for a predetermined arc, for recording/reproducing the magnetic tape. The magnetic recording/reproduction apparatus includes: a capstan shaft for driving the magnetic tape; and a pinch roller for pressing the magnetic tape against the capstan shaft. When the magnetic tape is being reproduced, the capstan shaft is rotated in a forward direction with the pinch roller pressing the magnetic tape against the capstan shaft. A pause operation of pausing the reproduction of the magnetic tape is performed by stopping the rotation of the capstan shaft, rotating the capstan shaft in a reverse direction by a predetermined amount, and then stopping the rotation of the capstan shaft again.

Thus, the invention described herein makes possible the advantage of providing a magnetic recording/reproduction apparatus in which a frozen state is not likely to occur. In order to achieve this, the magnetic recording/reproduction apparatus of the present invention has a function of reducing the tension acting upon the tape in a pause state while the reproduction/recording of the magnetic tape is being paused. The present invention having such a structure can prevent the attachment of a foreign substance onto the head, the seizure and the frozen state of the head.

This and other advantages of the present invention will become apparent to those skilled in the art upon reading and understanding the following detailed description with reference to the accompanying figures.

### BRIEF DESCRIPTION OF THE DRAWINGS

Figure **1** is a plan view illustrating a magnetic recording/reproduction apparatus according to an embodiment of the present invention in an unloaded mode where a cassette is removed therefrom;
Figure **2** is a detailed plan view illustrating a tension arm and peripheral elements of the magnetic recording/reproduction apparatus;
Figure **3** is a plan view illustrating the magnetic recording/reproduction apparatus in the unloaded mode with a subchassis being removed;
Figure **4** is a detailed plan view illustrating a tension plate and peripheral elements of the magnetic recording/reproduction apparatus in the unloaded mode;
Figure **5** illustrates a structure for driving an S boat and a T boat provided on a main chassis of the magnetic recording/reproduction apparatus;
Figure **6** illustrates a subchassis drive arm of the magnetic recording/reproduction apparatus;
Figure **7** illustrates a pinch arm and peripheral elements of the magnetic recording/reproduction apparatus;
Figure **8** illustrates the pinch arm of the magnetic recording/reproduction apparatus;
Figure **9** illustrates a pinch press arm of the magnetic recording/reproduction apparatus;
Figure **10** illustrates a twisted coil spring of the magnetic recording/reproduction apparatus;
Figure **11** is a cross-sectional view of an MIC-SW of the magnetic recording/reproduction apparatus taken along **A-A** line in Figure **1**;
Figure **12** is a cross-sectional view of the magnetic recording/reproduction apparatus taken along the direction indicated by an arrow B in Figure **1**;
Figure **13** is a plan view of the magnetic recording/reproduction apparatus in a loaded mode 1 where a tension post and a T4 post are pulled out;
Figure **14** is a plan view of the magnetic recording/reproduction apparatus in a loaded mode 2 where the subchassis has moved one half of its total stroke;
Figure **15** is a plan view of the magnetic recording/reproduction apparatus in a play mode where the apparatus is ready to perform functions such as recording, reproduction and fast-forward of a tape;
Figure **16** is a plan view illustrating the magnetic recording/reproduction apparatus in a stop mode where the tape is not being driven;
Figure **17** is a plan view illustrating the magnetic recording/reproduction apparatus in a reverse mode where the apparatus is ready to perform functions such as reverse reproduction and rewinding of the tape;
Figure **18** is a plan view illustrating the magnetic recording/reproduction apparatus in the loaded mode 1 with the subchassis being removed;
Figure **19** is a plan view illustrating the magnetic recording/reproduction apparatus in the loaded mode 2 with the subchassis being removed;
Figure **20** is a plan view illustrating the tension plate and the peripheral elements of the magnetic recording/reproduction apparatus in the loaded mode 1;
Figure **21** is a plan view illustrating the tension plate and the peripheral elements of the magnetic recording/reproduction apparatus in the loaded mode 2;
Figure **22** is a plan view illustrating the tension plate and the peripheral elements of the magnetic recording/reproduction apparatus in the play mode;
Figure **23** is a plan view illustrating the tension plate and the peripheral elements of the magnetic recording/reproduction apparatus in the stop or reverse mode;
Figure **24** is a plan view illustrating the relative positions of a boat drive arm and a subchassis drive arm of the magnetic recording/reproduction apparatus in the unloaded mode;
Figure **25** is a plan view illustrating the relative positions of the boat drive arm and the subchassis drive arm of the magnetic recording/reproduction apparatus in the loaded mode 1;
Figure **26** is a plan view illustrating the relative positions of the boat drive arm and the subchassis drive arm of the magnetic recording/reproduction apparatus in the loaded mode 2;
Figure **27** is a plan view illustrating the relative positions of the boat drive arm and the subchassis drive arm of the magnetic recording/reproduction apparatus in a pre-play mode which is between the loaded mode 2 and the play mode and is close to the loaded mode 2;
Figure **28** is a plan view illustrating the relative positions of the boat drive arm and the subchassis drive arm of the magnetic recording/reproduction apparatus in the play mode;
Figure **29** is a plan view illustrating the relative positions of the boat drive arm and the subchassis drive arm of the magnetic recording/reproduction apparatus in the stop mode;
Figure **30** is a plan view illustrating the relative positions of the boat drive arm and the subchassis drive arm of the magnetic recording/reproduction apparatus in the reverse mode;
Figure **31** is a plan view illustrating the relative positions of the pinch arm and the T4 arm of the magnetic recording/reproduction apparatus in the unloaded mode;
Figure **32** is a plan view illustrating the relative positions of the pinch arm and the T4 arm of the magnetic recording/reproduction apparatus in the loaded mode 1;
Figure **33** is a plan view illustrating the relative positions of the pinch arm and the T4 arm of the magnetic recording/reproduction apparatus in the loaded mode 2;
Figure **34** is a plan view illustrating the relative positions of the pinch arm and the T4 arm of the magnetic recording/reproduction apparatus in the play or reverse mode;
Figure **35** is a plan view illustrating the relative positions of the pinch arm and the T4 arm of the magnetic recording/reproduction apparatus in the stop mode; and
Figure **36** illustrates a conventional magnetic recording/reproduction apparatus **300**.

### DESCRIPTION OF THE PREFERRED EMBODIMENTS

A magnetic recording/reproduction apparatus according to an embodiment of the present invention will now be described.

The magnetic recording/reproduction apparatus winds a magnetic tape around a rotary head cylinder, having a rotary head, for a predetermined arc, for recording/reproducing the magnetic tape.

The "recording/reproduction" of a magnetic tape as used herein means at least one of recording data on the magnetic tape and reproducing data from the magnetic tape. Moreover, "data" as used herein includes at least one of image data, sound data, time data, location data, control data and program data. The "tape cassette" as used herein includes any type of cassette to/from which data can be recorded/reproduced, such as a DVC (digital video cassette), an 8 mm video cassette, a VHS cassette, and the like.

According to the present embodiment of the invention, when the magnetic tape is being reproduced, the capstan shaft is rotated in a forward direction with the pinch roller pressing the magnetic tape against the capstan shaft. In a pause state while the reproduction of the magnetic tape is being paused, a tension acting upon the magnetic tape is reduced or relaxed until the reproduction is resumed.

Thus, according to the present embodiment of the invention, it is possible to suppress the attachment of a foreign substance onto the head, the seizure and the frozen state of the head, which may happen while pausing the reproduction of the magnetic tape.

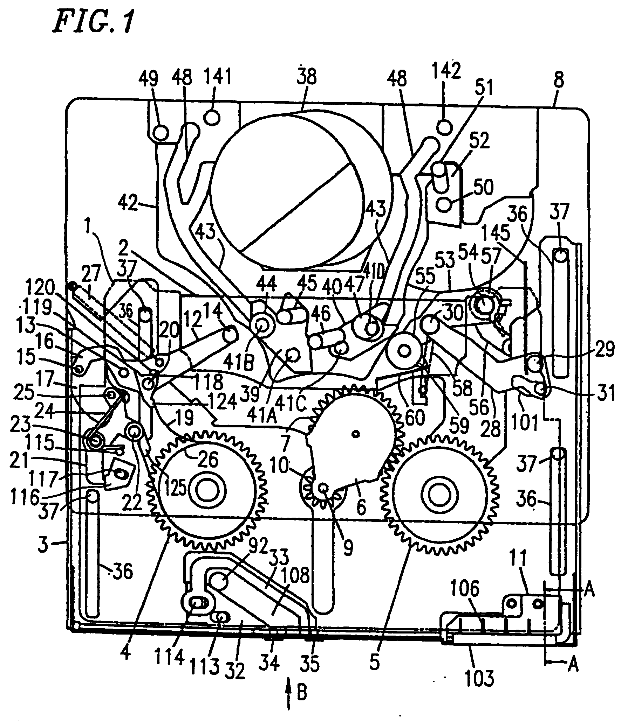

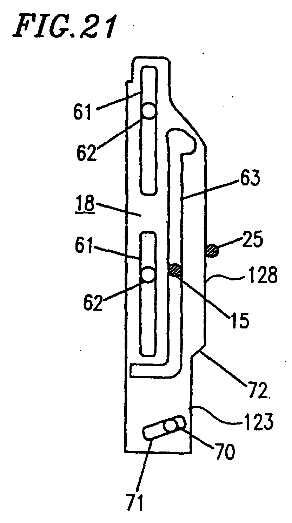

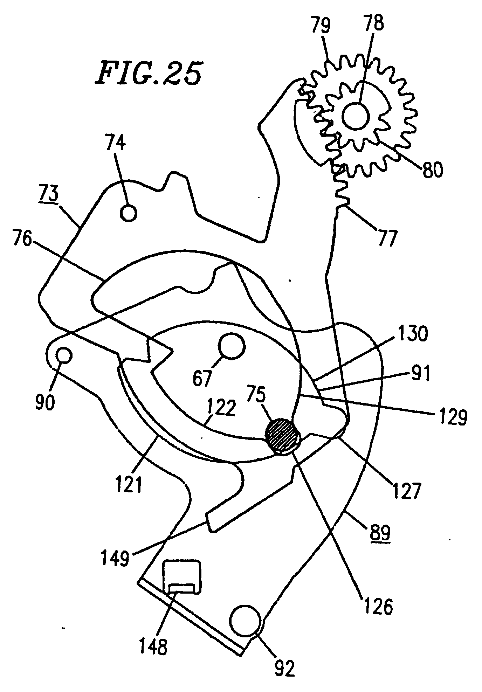

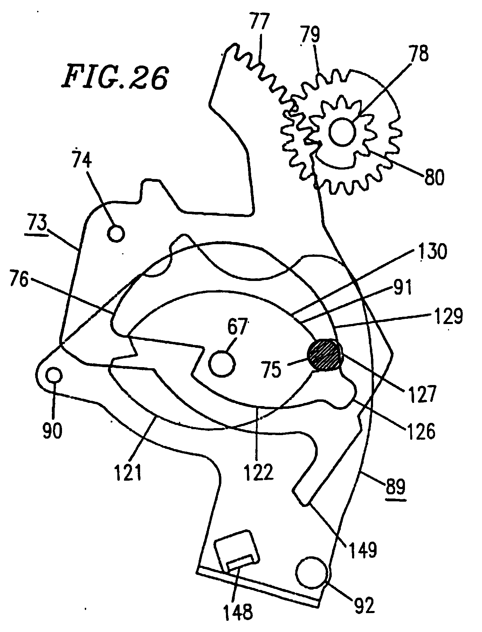

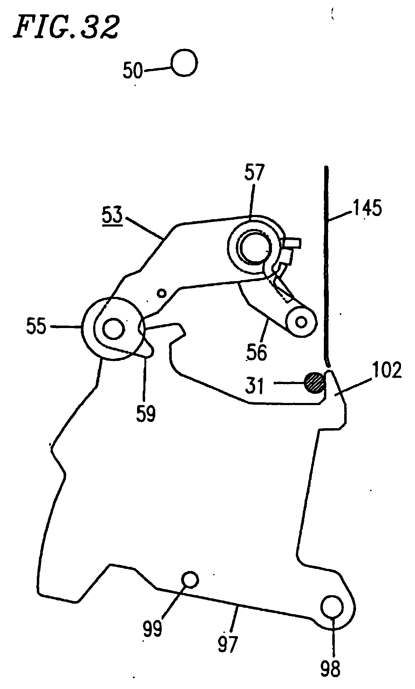

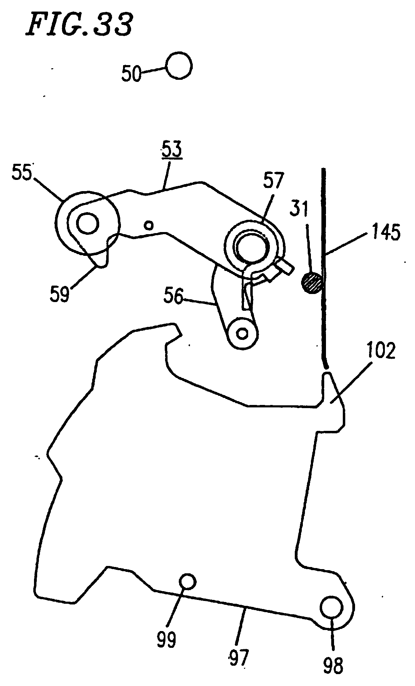

The magnetic recording/reproduction apparatus of the present invention will now be described in detail with reference to Figures **1** to **35**.

Figure **1** is a plan view illustrating the present embodiment of the invention in a position where a cassette is unloaded (hereinafter, referred to also as the "unloaded mode"). For the sake of simplicity, some elements of the magnetic recording/reproduction apparatus are not shown in Figure **1**.

A tape **2** is wound around two reels (not shown) housed in a cassette **1**, so that a portion of the tape **2** between the reels is placed under tension. In the Figures, the cassette **1** is illustrated only by its profile in a one dot chain line, and a portion of the tape **2** existing outside the cassette **1** is also shown in a one dot chain line, for the sake of simplicity.

The cassette **1** is attached to a subchassis **3**. An S reel base **4** and a T reel base **5**, which are rotatably provided on the subchassis **3**, are engaged with the reels (not shown) in the cassette **1**.

An idler gear **7** is axially supported on an idler **6**. The idler **6** is provided rotatably with respect to the center gear shaft **9**, which is provided on a main chassis **8**. The center gear **10** is provided rotatably with respect to the center gear shaft **9**. The idler gear **7** is rotated by the center gear **10** to be engaged with gears around the S reel base **4** and the T reel base **5**, thereby rotating the gears around the S reel base **4** and the T reel base **5**. A memory-in-cassette reading switch (hereinafter, referred to simply as the "MIC-SW") **11** is provided in the subchassis **3**.

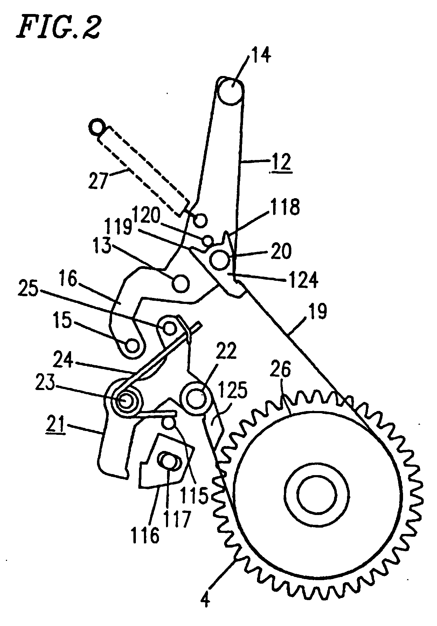

Figure **2** illustrates in detail a tension arm **12** and the peripheral elements thereof.

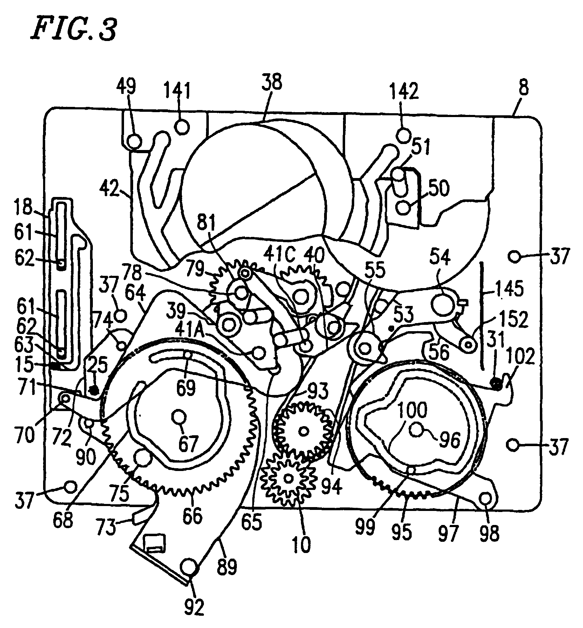

Referring to Figures **1** and **2**, the tension arm **12** is provided in the subchassis **3** to be rotatable about a tension arm shaft **13**. A tension post **14** is provided on one end of the tension arm **12**. A tension arm regulating pin **15** provided on an end **16** of the tension arm **12** passes through a hole **17** provided in the subchassis **3** to be engaged with a tension plate **18** (Figure **3**) on the main chassis **8** for regulating the movement of the tension arm **12**. The tension plate **18** is not shown in Figure **1**.

An end **124** of a tension band **19** is axially supported about a shaft **20** on the tension arm **12**. The other end **125** of the tension band **19** is axially supported about a shaft **22** on a tension band regulating arm **21**. The tension band regulating arm **21** is axially supported about a shaft **23** on the subchassis **3**, and is biased in the counterclockwise direction by a twisted coil spring **24**. A spring peg **115** is provided on the subchassis **3** for the twisted coil spring **24**. A tension arm stop plate **116** is fixed by a screw (not shown) on the subchassis **3** in a predetermined adjusted position **117**. The movement (and thus the position) of the tension band regulating arm **21** is regulated by contacting the tension arm stop plate **116**.

A pin **25** is provided in the tension band regulating arm **21**. The pin **25** passes through the hole **17** in the subchassis **3** to be engaged with the tension plate **18** for regulating the movement of the tension band regulating arm **21**. The tension band **19** is wound around a cylindrical portion **26** of the S reel base **4**. The tension arm **12** is biased in the counterclockwise direction by a tension spring **27**. An end of the tension spring **27** is hooked around a spring peg provided in the subchassis **3**.

In the present embodiment of the invention, all the tension springs are shown only by their profiles in a broken line for the sake of simplicity. A protrusion A **118** and a protrusion B **119** are provided at the end **124** of the tension band **19**. A band regulating protrusion **120** provided in the tension arm **12** regulates the movement of the tension band **19** by contacting and pushing back the protrusion A **118** and the protrusion B **119** so as to prevent the tension band **19** from slacking and thus dropping off the S reel base **4**.

In Figure **1**, a T4 arm **28** is axially supported about a shaft **29** on the subchassis **3**. A T4 post **30** is provided on an end of the T4 arm **28**, and a T4 arm regulating pin **31** is provided on the other end thereof. The T4 arm **28** is biased in the counterclockwise direction by a spring (not shown).

A cam A plate **32** and a cam B plate **33** are attached to the subchassis **3** by means of pins **34** and **35** so as to be movable in the left/right direction (in the plane of Figure 1). The cam A plate **32** and the cam B plate **33** are fixed to the subchassis **3** by means of screws (not shown) after their positions are adjusted.

The subchassis **3** includes four elongated holes **36** which are engaged with four axes **37** provided on the main chassis **8**, thereby supporting the subchassis **3** so that the subchassis **3** can move in the forward/backward direction (in the plane of the figure) along the four elongated holes **36**.

The tape **2** is wound around a cylinder **38** with a rotary magnetic head provided on the main chassis **8**, whereby the apparatus is ready to record/reproduce signals (data) to/from the tape **2**.

Pins **41A**, **41B** and **41C**, **41D** provided in an S boat **39** and a T boat **40**, respectively, are engaged with elongated holes **43** of a rail **42**, so that the S boat **39** and the T boat **40** move along the elongated holes **43**. An S1 post **45** and an S2 post **44** are provided on the S boat **39**, and a T1 post **46** and a T2 post **47** are provided on the T boat **40**. The tape **2** is wound around the cylinder **38** along with the movement of the S boat **39** and the T boat **40**.

A rail portion **48** is provided on the main chassis **8**, and an S3 post **49** is also provided on the main chassis **8**. A T3 post **51** is provided in a capstan housing **52** holding a capstan **50**.

A pinch arm **53** is axially supported about a pivotal shaft **54** on the main chassis **8**. A pinch roller **55** is rotatably provided on an end of the pinch arm **53**. A pinch press arm **56** is coaxial with the pivotal shaft **54** of the pinch arm **53**, and is biased by a twisted coil spring **57** together with the pinch arm **53**. A tension spring **58** is placed under tension between the pinch arm **53** and the subchassis **3** for biasing the pinch arm **53** in the counterclockwise direction. A protrusion **59** of the pinch arm **53** contacts a wall portion **60** of the subchassis **3**, thereby driving the pinch arm **53** along with the movement of the subchassis **3**.

An exemplary structure of the main chassis **8** will be described with reference to Figure **3**.

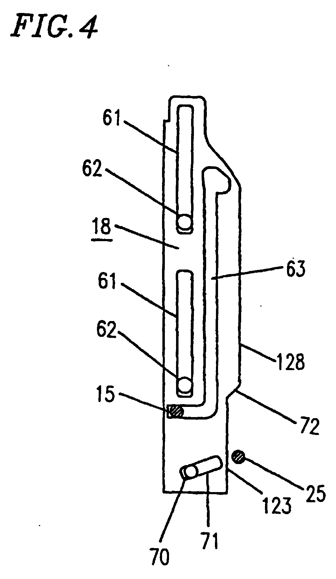

Figure **3** is a plan view similar to Figure **1** illustrating the magnetic recording/reproduction apparatus in the unloaded mode according to the present embodiment of the invention, but with the subchassis **3** being removed. Figure **4** illustrates in detail the tension plate **18**.

Referring to Figures **3** and **4**, two elongated holes **61** provided in the tension plate **18** are engaged with two guide pins **62** provided on the main chassis **8**, and the tension plate **18** is guided by the guide pins **62** in the forward/backward direction.

A cam groove **63** provided in the tension plate **18** is engaged with the tension arm regulating pin **15** illustrated in Figure **1**. A tension plate drive arm **64** is axially supported about a shaft **65** on the main chassis **8**. A cam gear **66** is axially supported about a shaft **67** on the main chassis **8**. A cam groove **68** provided on the cam gear **66** is engaged with a cam follower pin **69** provided on the tension plate drive arm **64**. A pin **70** provided on the tension plate drive arm **64** is engaged with a cam groove **71** provided in the tension plate **18**. The pin **25** provided on the tension band regulating arm **21** in Figure **1** contacts a right edge cam **72** of the tension plate **18**.

Referring to Figures **1**, **3** and **4**, the tension plate drive arm **64** is driven by the cam groove **68** of the cam gear **66**, and the tension plate **18** is driven by the pin **70** on the tension plate drive arm **64**.

The tension arm **12** and the tension band regulating arm **21** are driven and regulated respectively by the cam groov**e 63** and the right edge cam **72** provided in the tension plate **18**.

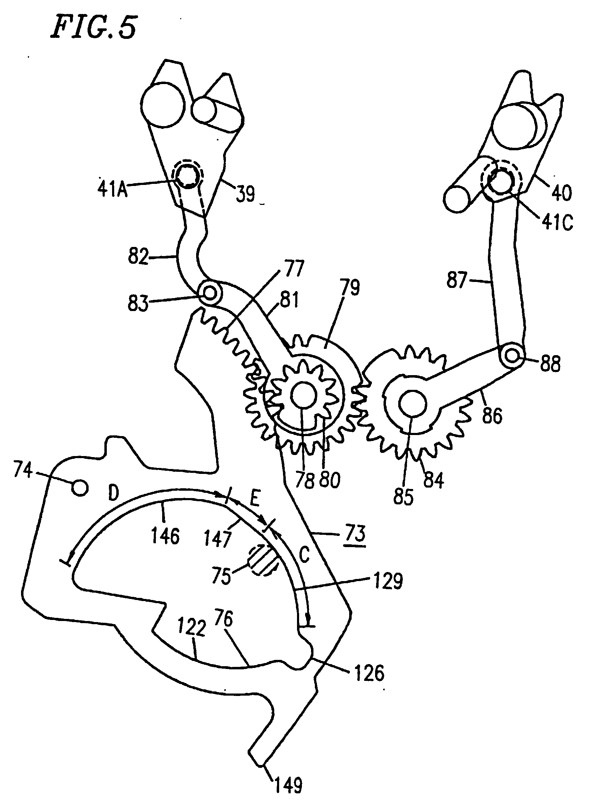

Figure **5** illustrates a structure for driving the S boat **39** and the T boat **40** provided on the main chassis **8**.

Referring to Figures **3** and **5**, a boat drive arm **73** is axially supported about a shaft **74** on the main chassis **8**. A drive pin **75** provided on the cam gear **66** contacts an inner cam **76** provided in the boat drive arm **73**. The boat drive arm **73** is driven by rotation of the cam gear **66**.

A gear portion **77** provided in the boat drive arm **73** is engaged with a small gear portion **80**, which is provided integrally with an S load gear **79**, which is axially supported about a shaft **78** on the main chassis **8**.

An S load arm **81** is supported coaxially with the S load gear **79**. An S load link **82** is rotatably attached to the S load arm **81** and the S boat **39** via a shaft **83** and the pin **41A**, respectively.

A T load gear **84** is axially supported about a shaft **85** on the main chassis **8**, and is engaged with the S load gear **79**. A T load arm **86** is supported coaxially with the T load gear **84**. A T load link **87** is rotatably attached to the T load arm **86** and the T boat **40** via a shaft **88** and the pin **41C**, respectively.

In a normal state, the S load arm **81** and the S load gear **79** are held together by a twisted coil spring (not shown) and rotate about the shaft **78**. When the S load gear **79** is rotated in the clockwise direction, the S load gear **79** is biased in the counterclockwise direction by the twisted coil spring (not shown). Similarly, in a normal state, the T load arm **86** and the T load gear **84** are held together by a twisted coil spring (not shown) and rotate about the shaft **85**. When the T load gear **84** is rotated in the counterclockwise direction with the T load arm **86** being stopped, the T load gear **84** is biased in the clockwise direction by the twisted coil spring (not shown).

The S load gear **79** and the T load gear **84** are driven by pivotal movement of the boat drive arm **73**, thereby moving the S boat **39** and the T boat **40** along the rail **42** via the S load link **82** and the T load link **87**, respectively.

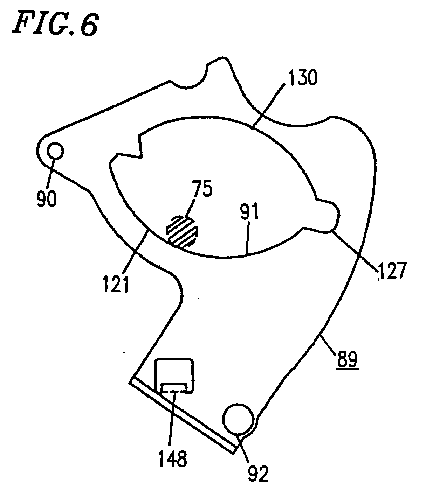

Figure **6** illustrates a subchassis drive arm **89**. Referring to Figures **1**, **3** and **6**, the subchassis drive arm **89** is axially supported about a shaft **90** on the main chassis **8**. As in the boat drive arm **73**, an inner cam **91** provided in the subchassis drive arm **89** is driven by the drive pin **75** provided on the cam gear **66**.

A guide pin **92** provided on the subchassis drive arm **89** contacts the cam A plate **32** and the cam B plate **33** via a hole **108** provided in the subchassis **3** as illustrated in Figure **1**. The subchassis drive arm **89** is driven by the cam gear **66**, and the subchassis **3** is driven by the subchassis drive arm **89** via the cam A plate **32** and the cam B plate **33**.

The position of the subchassis **3** with respect to the main chassis **8** can be adjusted by adjusting the positions of the cam A plate **32** and the cam B plate **33** in the left/right direction.

Referring to Figure **3**, a timing belt **93** transfers the rotation of the capstan **50** to a two-stage gear **94** axially supported on the main chassis **8**. The two-stage gear **94** is meshed with the center gear **10**, whereby the rotation of the capstan **50** is transferred to the S reel base **4** and the T reel base **5** via the timing belt **93**, the two-stage gear **94**, the center gear **10** and the idler gear **7**.

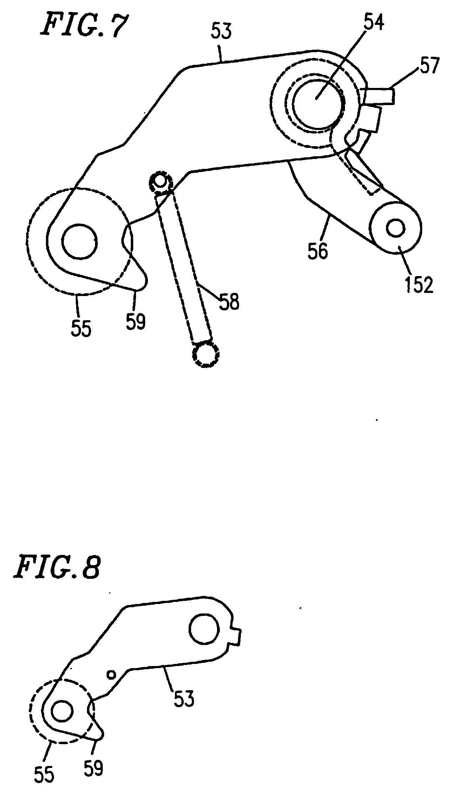

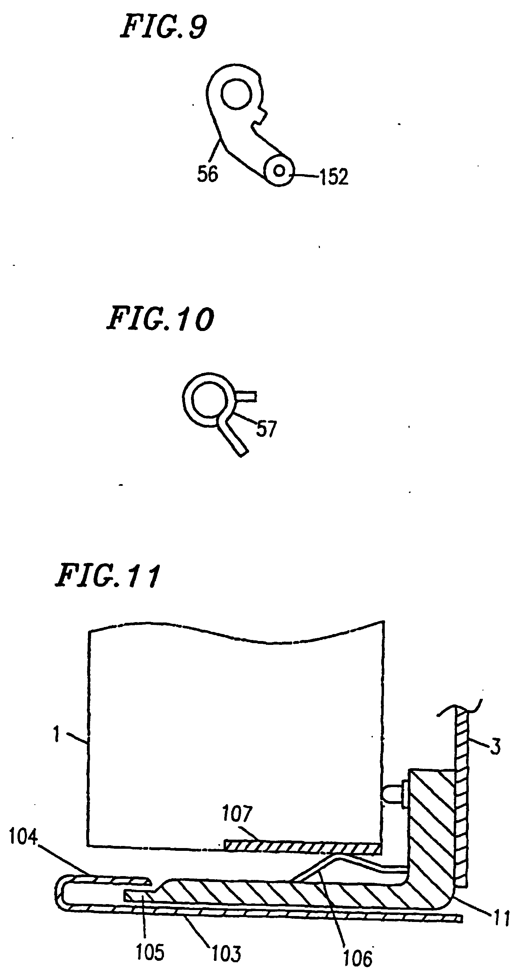

Figures **7** and **8** illustrate an exemplary structure of the pinch arm **53**. Figure **9** illustrates an exemplary structure of the pinch press arm **56**, and Figure **10** illustrates an exemplary structure of the twisted coil spring **57**.

In Figures **7** and **8**, the pinch roller **55** is illustrated only by its profile in a broken line.

Referring to Figure **7**, in a normal state (e.g., one of various states other than a state where the S boat **39** is in contact with a boat stopper **141**), the pinch arm **53** and the pinch press arm **56** are held together by the twisted coil spring **57** and rotate about the pivotal shaft **54**. When the pinch press arm **56** is rotated in the clockwise direction while the pinch roller **55** is in contact with the capstan **50** (whereby its pivotal movement is stopped), the pinch roller **55** is pressed against the capstan **50** by virtue of a reacting force from the twisted coil spring **57**. A roller **152** is axially supported on the pinch press arm **56**.

Referring to Figure **3**, a pinch cam gear **95** is axially supported about a shaft **96** on the main chassis **8**. A pinch drive arm **97** is axially supported on the main chassis **8**. A cam pin **99** provided on the pinch drive arm **97** is engaged with a cam groove **100** provided in the pinch cam gear **95**, whereby the pinch drive arm **97** is driven by the pinch cam gear **95**.

Referring to Figures **1** and **3**, the T4 arm regulating pin **31** passes through a hole **101** provided in the subchassis **3** so as to contact a protrusion **102** provided on the pinch drive arm **97**. The T4 arm **28** is driven by the rotation of the pinch drive arm **97**.

Figure **11** is a cross-sectional view taken along a chain line **A-A** in Figure **1**, illustrating the MIC-SW **11**.

Referring to Figures **1** and **11**, the MIC-SW **11** is fixed by a screw (not shown) on the subchassis **3**. A subchassis reinforcing plate **103** is fixed on the subchassis **3** by leans of a screw (not shown). A folded upper end portion **104** of the subchassis reinforcing plate **103**, shown on the left side of Figure **11**, is engaged with an upper end portion **105** of the MIC-SW **11**, thereby increasing the mechanical strength of the MIC-SW **11**.

A contact terminal **106** provided on the MIC-SW **11** contacts a memory-in-cassette **107** provided in the cassette so as to input/output a signal. As the contact terminal **106** is pressed by the cassette **1**, the MIC-SW **11** is subject to the reacting force. The main body of the MIC-SW **11** is typically made of a plastic, or the like, and therefore the MIC-SW **11** is subject to creep deformation. According to the present invention, however, the MIC-SW **11** can be reinforced by the subchassis reinforcing plate **103**, whereby the MIC-SW **11** can be made thin, thereby reducing the size of the apparatus.

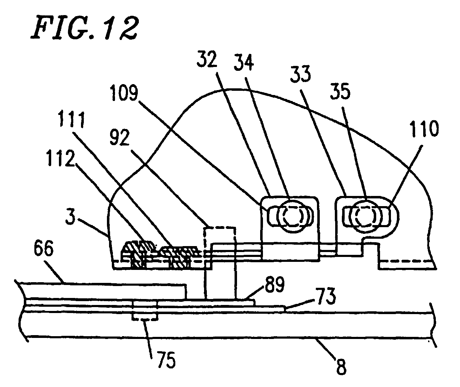

Figure **12** illustrates the magnetic recording/reproduction apparatus of Figure **1** as viewed from the direction **B**.

Referring to Figures **1** and **12**, the boat drive arm **73** and the subchassis drive arm **89** are driven by the drive pin **75** provided on the cam gear **66**. Elongated holes **109** and **110** are provided in the cam A plate **32** and the cam B plate **33**, respectively.

The cam A plate **32** and the cam B plate **33** are held on the subchassis **3** so as to be movable in the left/right direction via the elongated holes **109** and **110**. The cam A plate **32** and the cam B plate **33** are fixed to the subchassis **3** by screws **111** and **112**.

In positions **113** and **114** in Figure **1**, the positions of the cam A plate **32** and the cam B plate **33** are adjusted so as to guide the guide pin **92** in the left/right direction with respect to the subchassis **3**, after which the cam A plate **32** and the cam B plate **33** are fixed by means of the screws **111** and **112**.

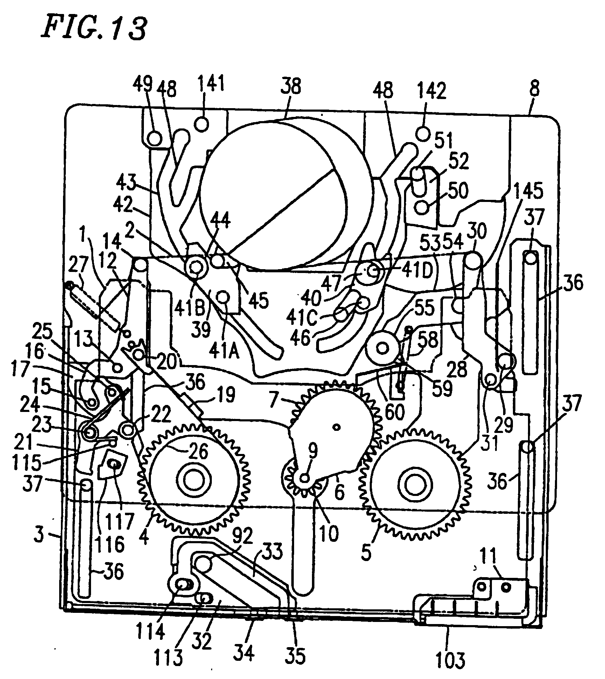

Figures **13** to **17** are plan views illustrating a sequence of operation modes from the unloaded mode to the tape recording/reproduction mode according to the present embodiment of the invention.

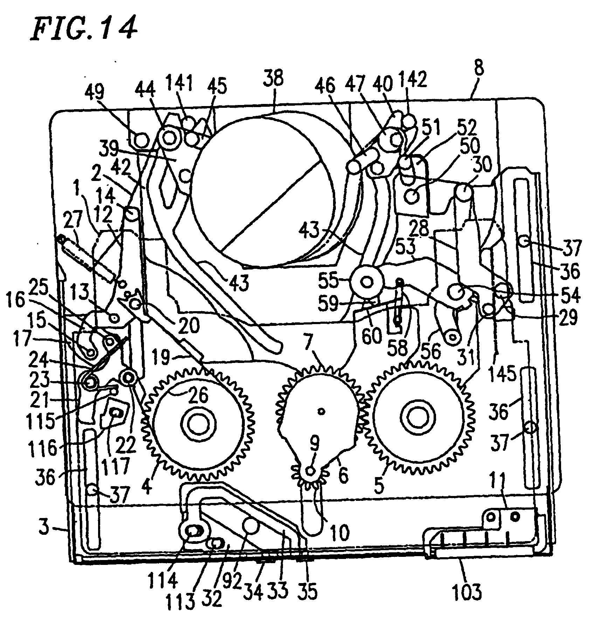

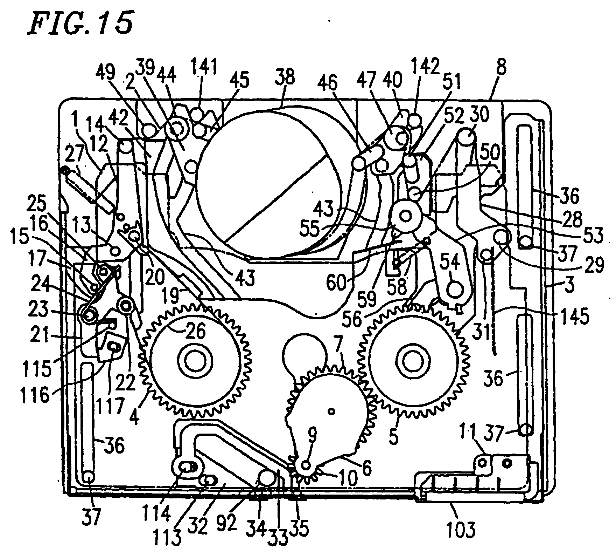

Figure **13** illustrates a mode where the tension Post **14** and the T4 post **30** have been pulled out (hereinafter, referred to as the "loaded mode 1"). Figure **14** illustrates a mode where the subchassis **3** has moved one half of its total stroke (hereinafter, referred to as the "loaded mode 2"). Figure **15** illustrates a mode where the subchassis **3** has moved completely while the tape loading (i.e., winding of the tape **2** around the cylinder **38**) has been complete (hereinafter, referred to as the "play mode"). In the play mode, the tape can be driven in the forward direction (from the S reel base **4** to the T reel base **5**), thereby performing functions such as recording, reproduction and fast-forward of the tape.

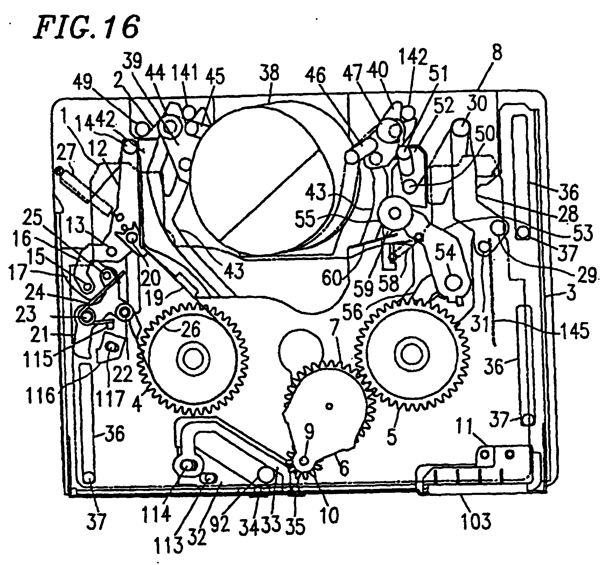

Figure **16** illustrates a mode where the tape is not driven (hereinafter, referred to as the "stop mode").

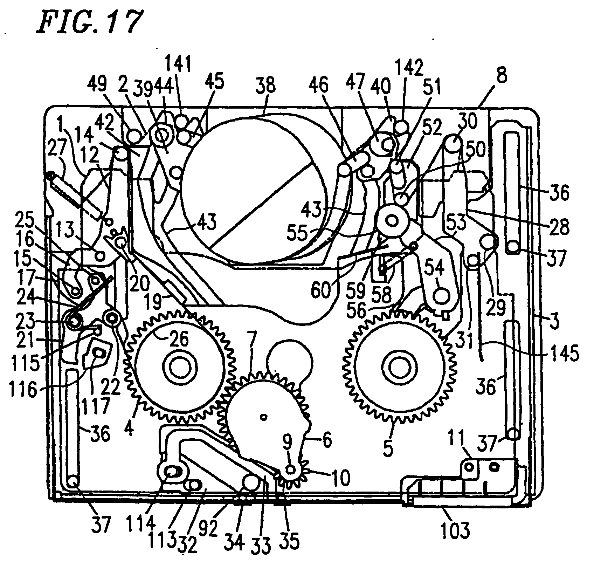

Figure **17** illustrates a mode where the tape can be driven in the reverse direction (from the T reel base **5** to the S reel base **4**), thereby performing other functions such as reverse reproduction and rewinding of the tape (hereinafter, referred to as the "reverse mode").

Elements in Figures **13** to **17** having like reference numerals to those shown in Figure **1** will not be further described.

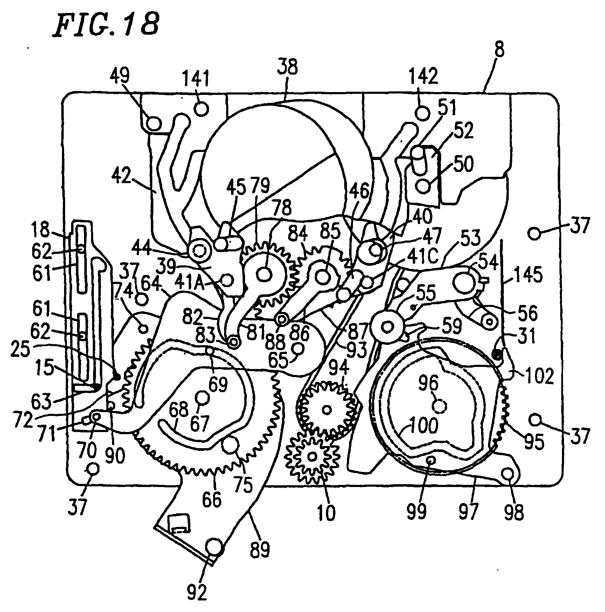

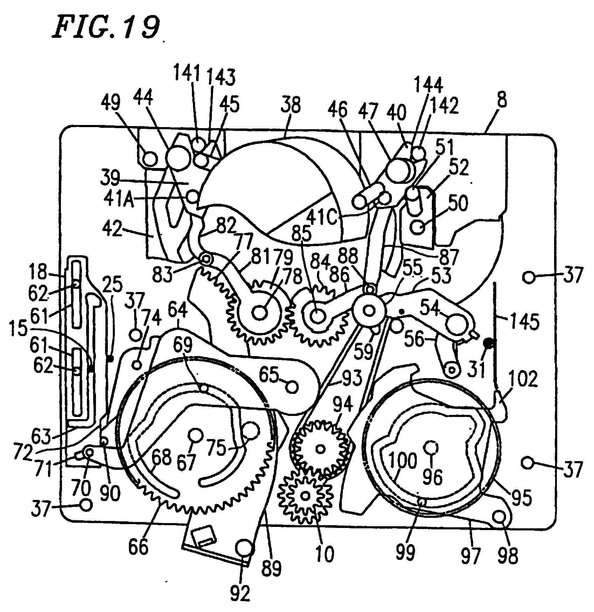

An exemplary structure of the main chassis **8** will now be described with reference to Figures **18** and **19**.

Figures **18** and **19** are plan views similar to Figure **3** illustrating an embodiment of the present invention, but with the subchassis **3** being removed.

Figure **18** illustrates the magnetic recording/reproduction apparatus in the loaded mode 1, and Figure **19** illustrates the magnetic recording/reproduction apparatus in the loaded mode 2. As described above, the unloaded mode is illustrated in Figure **3**. Elements in Figures **18** and **19** having like reference numerals to those shown in Figure **3** will not be further described.

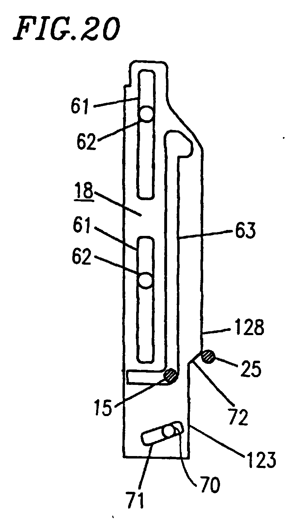

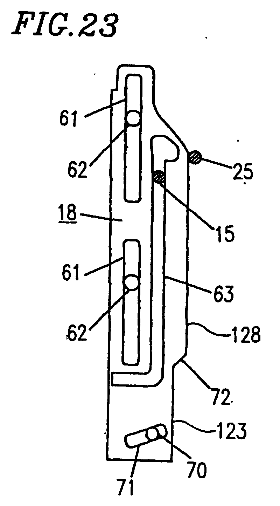

Figures **20** to **23** are detailed views illustrating the tension plate **18** and the peripheral elements. In particular, Figures **20** to **23** illustrate the positional relationship among the tension plate **18**, the tension arm regulating pin **15**, the pin **25** and the guide pins **62**, in the loaded mode 1, the loaded mode 2, the play mode, and the stop or reverse mode, respectively. Note that, in the present embodiment of the invention, the positional relationship among these elements is the same in the stop mode and in the reverse mode, as illustrated in Figure **23**.

As described above, the positional relationship among these elements in the unloaded mode is illustrated in Figure **4**. Elements in Figures **20** to **23** having like reference numerals to those shown in Figure **4** will not be further described.

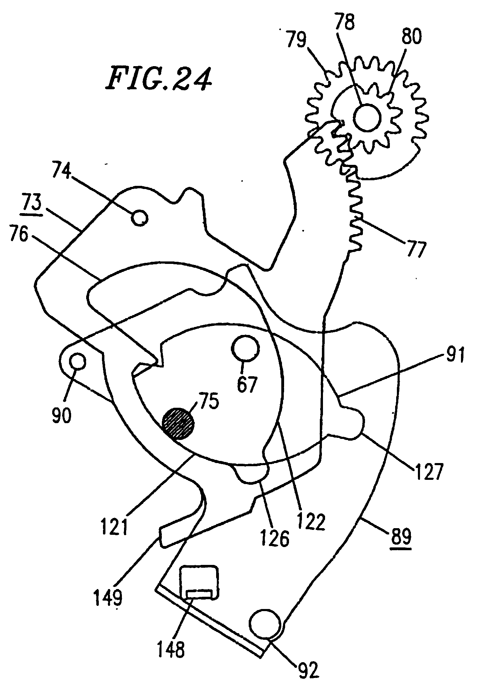

Figures **24** to **30** illustrate an operation where the boat drive arm **73** and the subchassis drive arm **89** are driven by the drive pin **75** provided in the cam gear **66** (shown in Figure **3**). Figures **24** to **30** correspond to the unloaded mode, the loaded mode 1, the loaded mode 2, a "pre-play mode", the play mode, the stop mode, the reverse mode, respectively. Herein, the "pre-play mode" is between the loaded mode 2 and the play mode and is close to the loaded mode 2.

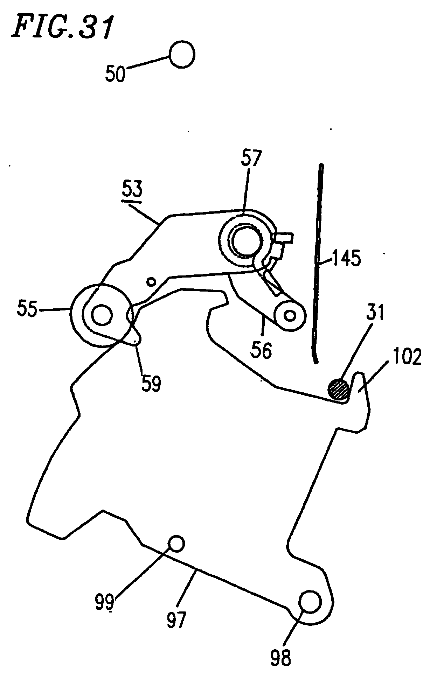

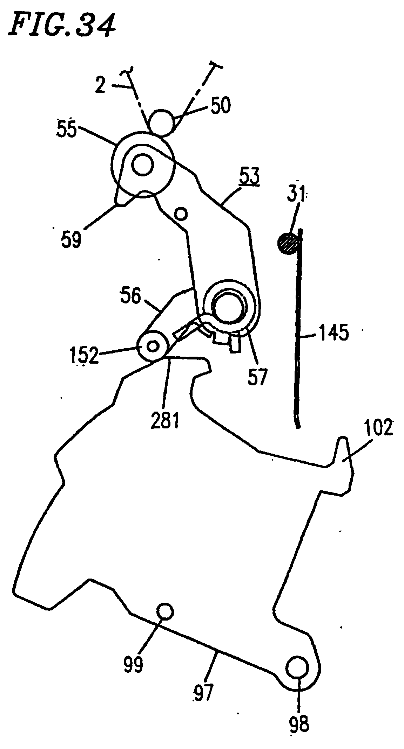

Figures **31** to **35** illustrate an operation where the pinch arm **53** on the main chassis **8** and the T4 arm **28** on the subchassis **3** are driven by the pinch drive arm **97**. In Figures **31** to **35**, the T4 arm **28** itself is not shown, but only the T4 arm regulating pin **31** provided thereon is shown. Figures **31** to **35** correspond to the unloaded mode, the loaded mode 1, the loaded mode 2, the play and reverse modes, and the stop mode, respectively. Note that, in the present embodiment of the invention, the respective movements of the pinch drive arm **97**, the pinch arm **53** and the T4 arm **28** are the same in the play mode and in the reverse mode, as illustrated in Figure **34**.

An operation for transiting from the unloaded mode to the reverse mode according to the present embodiment of the invention will be described. As described above, Figures **1**, **3**, **4**, **24** and **31** relate to the unloaded mode.

In Figure **1**, the tape **2** has not been pulled out from the cassette **1**.

In Figures **1**, **3** and **24**, the subchassis **3** is in the farthest position from the main chassis **8**. The drive pin **75** on the cam gear **66** is in contact with respective first arc portions **121** and **122** of the inner cams **91** and **76** provided in the subchassis drive arm **89** and the boat drive arm **73**. The subchassis drive arm **89** and the boat drive arm **73** are in their farthest rotational positions in the clockwise direction.

The S load gear **79** is in the state of having been rotated counterclockwise to the maximum by the gear portion **77** of the boat driving arm **73**. This state of the S load gear **79** forces the S boat **39** to be located at the most forward position in the elongated hole **43** of the rail **42** as is understood from the construction shown in Figure **5**. Likewise, the T load gear **84** is in the state of having been rotated clockwise to the maximum. This state of the T load gear **84** forces the T boat **40** to be located at the most forward position in the elongated hole **43** of the rail **42** as is understood from the construction shown in Figure **5**.

In Figures **1**, **3** and **4**, the tension plate **18** is in its rearmost position (the lower most position in the Figures) corresponding to the position of the tension plate drive arm **64**, and the tension arm **12** is in the farthest rotational position in the clockwise direction corresponding to the position of the tension arm regulating pin **15** along the cam groove **63** in the tension plate **18**.

The pin **25** provided in the tension band regulating arm **21** is located along a lower depression **123** of the right edge cam **72** of the tension plate **18**, where the tension band regulating arm **21** is stopped by the tension arm stop plate **116**.

The tension band regulating arm **21** is biased in the counterclockwise direction by the twisted coil spring **24** into contact with, and stopped by, the tension arm stop plate **116**.

In this position, the end **124** of the tension band **19** is close to the S reel base **4**, whereby the tension band **19** is slack, but the other end **125** of the tension band **19** is moved by the tension band regulating arm **21** away from the S reel base **4**, thereby reducing the slack of the tension band **19**.

Moreover, the protrusion A **118** of the tension band **19** is pushed by the band regulating protrusion **120** provided in the tension arm **12**, thereby also reducing the slack of the tension band **19**. These together prevent the tension band **19** from slacking and thus dropping off the S reel base **4**.

In Figures **1**, **3** and **31**, the pinch arm **53** has been pivoted to its farthest pivotal position in the counterclockwise direction by the tension spring **58**. In this position, the pinch drive arm **97** is not in contact with the pinch arm **53**.

The T4 arm **28** is in its farthest pivotal position in the counterclockwise direction.

The loaded mode 1 will now be described with reference to Figures **13**, **18**, **20**, **25** and **32**.

Referring to Figure **13**, the tape **2** has been pulled out by the tension post **14** and the T4 post **30** to the position illustrated in Figure **13**. The tape **2** has been partially wound around the S1 post **45** on the S boat **39** and the cylinder **38**.

In Figures **13**, **18** and **25**, the drive pin **75** on the cam gear **66** is still on the first arc portion **121** of the subchassis drive arm **89**, and the subchassis **3** has not been driven and is in its unloaded mode position. In the boat drive arm **73**, on the other hand, the drive pin **75** has passed the first arc portion **122** and is engaged with a depression **126** provided in the inner cam **76**, and the boat drive arm **73** has started rotating in the counterclockwise direction, with the S boat **39** and the T boat **40** being moved along the rail **42** in the direction to pull out the tape **2** by the S load gear **79** and the T load gear **84**, respectively.

In Figures **13**, **18** and **20**, the tension plate **18** is moved by the tension plate drive arm **64** to the forward side (the cylinder side), along with which the tension arm regulating pin **15** is driven by the cam groove **63** of the tension plate **18** so as to rotate the tension arm **12** in the counterclockwise direction, thereby pulling out the tape **2**. Along with the movement of the tension plate **18**, the tension band regulating arm **21** is rotated by a protrusion **128** of the right edge cam **72** in the clockwise direction. Therefore, the tension band **19** slackens for the cylindrical portion **26** of the S reel base **4** so that the S reel base **4** is allowed to rotate.

In Figures **13**, **18** and **32**, the subchassis **3** has not been moved, whereby the pinch arm **53** is in its position as in the unloaded mode.

The T4 arm **28** is moved to pull out the tape **2** by the protrusion **102** of the pinch drive arm **97** via the T4 arm regulating pin **31**.

The loaded mode 2 will now be described with reference to Figures **14**, **19**, **21**, **26** and **33**.

Referring to Figure **14**, the cassette **1** is moving toward the cylinder **38**, and the tape **2** is being wound around the cylinder **38** by the S2 post **44**, the S1 post **45**, the T1 post **46** and the T2 post **47**. While the S boat **39** and the T boat **40** have been moved to their predetermined positions, the tension post **14** and the T4 post **30** are still on their way to the predetermined positions, whereby the predetermined tape driving path for recording/reproducing data to/from the tape **2** has not been complete.

In Figures **14**, **19** and **26**, the drive pin **75** on the cam gear **66** has passed the first arc portion **121** of the subchassis drive arm **89** to be engaged with a depression **127** provided in the inner cam **91**. Thus, the subchassis drive arm **89** has started rotating in the counterclockwise direction, with the subchassis **3** being moved toward the cylinder **38** via the guide pin **92**.

In the boat drive arm **73**, on the other hand, the drive pin **75** has passed the depression **126** provided in the inner cam **91** and is located along a second arc portion **129**. While the drive pin **75** is in the depression **126**, the drive pin **75** rotates the boat drive arm **73**. However, while the drive pin **75** is located along the first arc portion **122** or the second arc portion **129**, the boat drive arm **73** stays in a predetermined position.

The boat drive arm **73** is in the farthest rotational position in the counterclockwise direction, and the S boat **39** and the T boat **40** have been moved to their predetermined positions on the main chassis **8** via the gear portion **77**, the S load gear **79** and the T load gear **84**.

Boat stoppers **141** and **142** are provided on the main chassis **8** for stopping the S boat **39** and the T boat **40** by contacting the S boat **39** and the T boat **40** at their V-shaped portions **143** and **144**, respectively (Figure **19**). The S load gear **79** and the S load arm **81** rotate integrally during the movement of the S boat **39**. Likewise, the T load gear **84** and the T load arm **86** rotate integrally during the movement of the T boat **40**. The S load link **82** and the S load arm **81** are configured so that the S boat **39** reaches a predetermined position at a time slightly before the mode shift from the loaded mode 1 to the loaded mode 2. Likewise, the T load link **87** and the T load arm **86** are configured so that the T boat **40** reaches a predetermined position at a time slightly before the mode shift from the loaded mode 1 to the loaded mode 2. During the remaining time until the start of the loaded mode 2, the boat driving arm **73** rotates the S load gear **79** clockwise and the T load gear **84** counterclockwise. As a result, since the S load gear **79** has rotated slightly relative to the S load arm **81**, a torsion coil spring (not shown) resting between the S load gear **79** and the S load arm **81** is twisted. By the repulsive force of the twisted torsion coil spring, the S boat **39** is pressed against the boat stopper **141** and secured thereto. Likewise, since the T load gear **84** has rotated slightly relative to the T load arm **86**, a torsion coil spring (not shown) resting between the T load gear **84** and the T load arm **86** is twisted. By the repulsive force of the twisted torsion coil spring, the T boat **40** is pressed against the boat stopper **142** and secured thereto.

In Figures **14**, **19** and **24**, the relative positions of the tension arm **12** and the tension band regulating arm **21** with respect to the subchassis **3** in the loaded mode 1 are maintained unchanged by the tension plate **18** during a tape loading process from the loaded mode 1 until immediately before the play mode. Thus, the relative position of the tension arm **12** with respect to the subchassis **3** is fixed, while the tension band **19** slackens for the cylindrical portion **26** of the S reel base **4** by the pivotal movement of the tension band regulating arm **21** in the clockwise direction so that the S reel base **4** is allowed to rotate.

Referring to Figures **14**, **19** and **33**, along with the movement of the subchassis **3**, the pinch arm **53** rotates in the clockwise direction as the protrusion **59** of the pinch arm **53** is pushed by the wall portion **60** of the subchassis **3**.

Along with the movement of the subchassis **3**, the T4 arm regulating pin **31** on the T4 arm **28** moves from the protrusion **102** of the pinch drive arm **97** onto a T4 guide **145** provided on the main chassis **8**.

While the subchassis **3** is moved, the relative position of the T4 arm **28** with respect to the subchassis **3** in the loaded mode 1 is maintained unchanged by the T4 guide **145**.

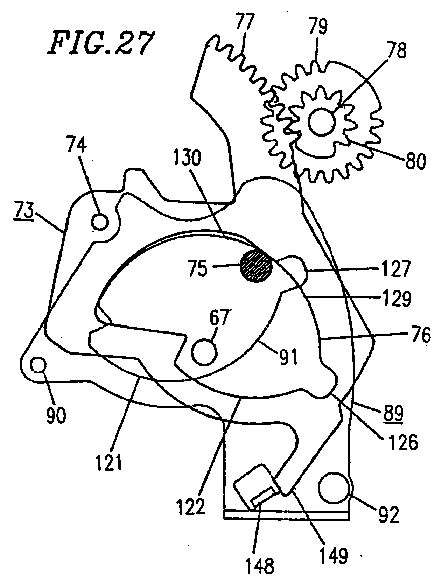

The pre-play mode (immediately before the play mode) will now be described with reference to Figure **27**.

The drive pin **75** on the cam gear **66** has passed the depression **127** of the subchassis drive arm **89** and is located along a second arc portion **130** provided in the inner cam **91**.

The subchassis drive arm **89** is in the farthest rotational position in the counterclockwise direction, and the subchassis **3** has been moved to its predetermined position via the guide pin **92**. The drive pin **75** is located along the second arc portion **129** of the inner cam **76** of the boat drive arm **73**, and the boat drive arm **73** is thus in its position as in the loaded mode 2.

The play mode will now be described with reference to Figures **15**, **22**, **28** and **34**.

Referring to Figure **15**, the tape **2** has been pulled out from the cassette **1**, thereby completing the tape driving path for recording/reproducing data to/from the tape **2**.

The completed tape driving path will be described with reference to Figure **15**.

The tape **2** is pulled out from the tape supply reel (not shown) located on the left side in the cassette **1**, and runs around the tension post **14**, the S3 post **49** provided on the main chassis **8**, the S2 post **44** and the S1 post **45**. The tape **2** from the S1 post **45** is wound around the cylinder **38**, for a predetermined arc and at a predetermined inclination angle, in conformity with the standard of the tape recording pattern. Past the cylinder **38**, the tape **2** runs around the T1 post **46**, the T2 post **47** and the T3 post **51**, at which time the tape **2** is at the same height as immediately after the cassette **1**, without any twist. Then, the tape **2** runs around the capstan **50**, which is perpendicular to the tape driving direction, and the T4 post **30**, after which the tape **2** runs around the take-up reel (not shown) located on the right in the cassette **1**.

The tension post **14**, the S3 post **49**, the S2 post **44**, T2 post **47** and T4 post **30** are perpendicular to the tape driving direction, whereas the S1 post **45**, the T1 post **46** and the T3 post **51** are inclined with respect to the tape driving direction.

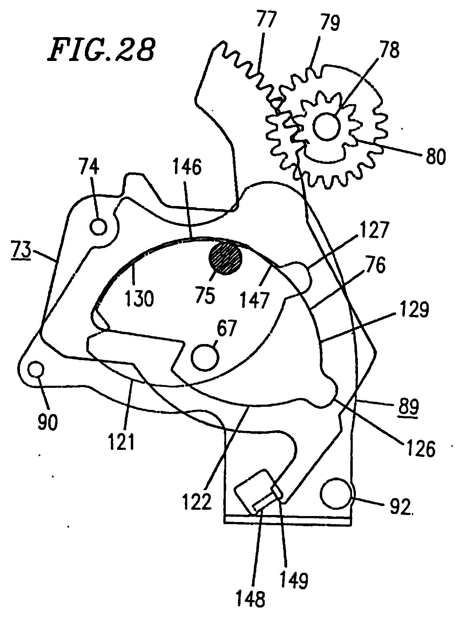

Referring to Figure **28**, the drive pin **75** on the cam gear **66** is located along second arc portion **130** of the subchassis drive arm **89**, and the position of the subchassis drive arm **89** is the same as in the pre-play mode, as illustrated in Figure **27**. Thus, the subchassis **3** has been moved completely.

In the boat drive arm **73**, on the other hand, the drive pin **75** is located along a third arc portion **146** provided in the inner cam **76**.

As illustrated in Figure **5**, the third arc portion **146** (indicated by "D") has a radius which is slightly greater than that of the second arc portion **129** (indicated by "C"). A transitional portion **147** (indicated by "E") extends between the second arc portion **129** and the third arc portion **146**.

Referring to Figure **28**, the boat drive arm **73** has been slightly rotated in the clockwise direction from the pre-play mode illustrated in Figure **27**, and a boat drive arm stop portion **148** provided in the subchassis drive arm **89** is in contact with a protrusion **149** of the boat drive arm **73**. This small amount of return rotation of the boat drive arm **73** occurring between the pre-play mode and the play mode is sufficiently smaller than the rotational phase difference of the S load gear **79** and the S load arm **81** with respect to the T load gear **84** and the T load arm **86**. Therefore, the press-fit connection of the S boat **39** and the T boat **40** onto the boat stoppers **141** and **142** is maintained.

Thus, in the play mode and thereafter, the reacting force from the press-fit connection of the S boat **39** and the T boat **40** is maintained by the boat drive arm stop portion **148**, not by the drive pin **75**, whereby the position of the boat drive arm **73** is determined by the boat drive arm stop portion **148**, not by the drive pin **75**.

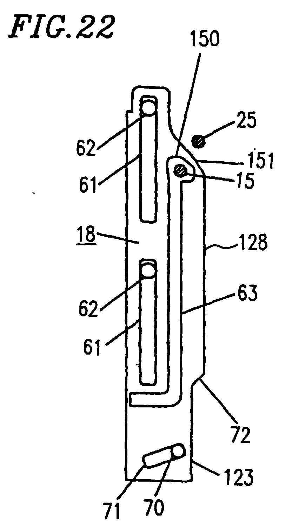

In Figures **15** and **22**, the tension arm regulating pin **15** is located at a top free section **150** at the upper end of the cam groove **63**.

The tension plate **18** is not in contact with the tension arm regulating pin **15**.

The pin **25** provided in the tension band regulating arm **21** is located along an upper depression **151** of the right edge cam **72** of the tension plate **18**, and the position of the tension band regulating arm **21** on the subchassis **3** is determined by contacting the tension arm stop plate **116** as in the unloaded mode.

The tension arm **12** is positioned by the tension band **19** being wound around the cylindrical portion **26** of the S reel base **4** without slack by virtue of the tension provided by the tension spring **27**. As a frictional force is generated between the tension band **19** and the cylindrical portion **26** of the S reel base **4**, and the tape **2** runs around the tension post **14** while being wound therearound under tension, a feedback control is provided for the frictional force so as to stably maintain the tape tension.

The position of the tension post **14** in the play mode can thus be adjusted by moving the tension arm stop plate **116** and fixing it with a screw (not shown).

Referring to Figure **34**, in the play mode, the pinch drive arm **97** is pivoted in the clockwise direction by the pinch cam gear **95**, and a pressing cam portion **281** on the pinch drive arm **97** presses the roller **152** axially supported on the pinch press arm **56**, whereby the twisted coil spring **57** presses the pinch roller **55** onto the capstan **50** via the tape **2**. Thus, the tape **2** is driven by the rotation of the capstan **50**.

The position of the T4 arm **28** is maintained by the T4 guide **145**.

The stop mode will now be described with reference to Figures **16**, **23**, **29** and **35**.

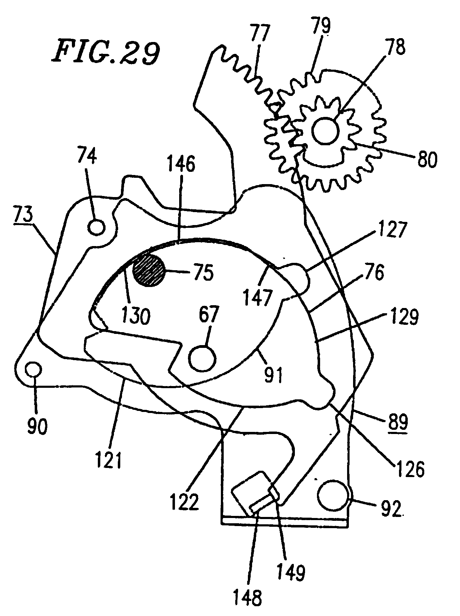

In Figure **29**, the positions of the subchassis drive arm **89** and the boat drive arm **73** are the same as those in the play mode (see Figure **28**), except that the position of the drive pin **75** on the cam gear **66** is different.

Referring to Figures **16** and **23**, the tension plate **18** is slightly moved toward the rear side by the tension plate drive arm **64** from the play mode (see Figure **22**). The relative positions of the tension arm **12** and the tension band regulating arm **21** with respect to the subchassis **3** are the same as those in the loaded mode 1 and the loaded mode 2.

Referring to Figure **29**, the subchassis drive arm **89** and the boat drive arm **73** are in the same state as that in the play mode (see Figure **28**), with only the drive pin **75** on the cam gear **66** being moved.

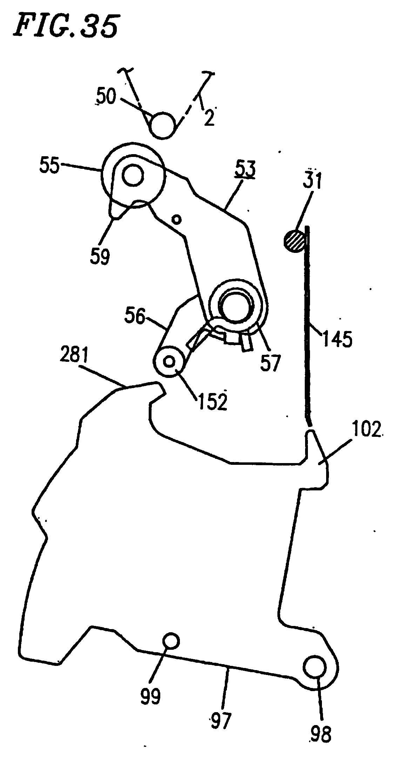

Referring to Figures **16** and **35**, the pinch drive arm **97** is rotated in the counterclockwise direction and is not in contact with the roller **152** of the pinch press arm **56**. The pinch arm **53** is biased in the counterclockwise direction by the tension spring **58** and is in contact with the wall portion **60** of the subchassis **3**. In this position, the pinch roller **55** and the capstan **50** are spaced apart from each other.

The reverse mode will now be described with reference to Figures **17**, **23**, **30** and **34**.

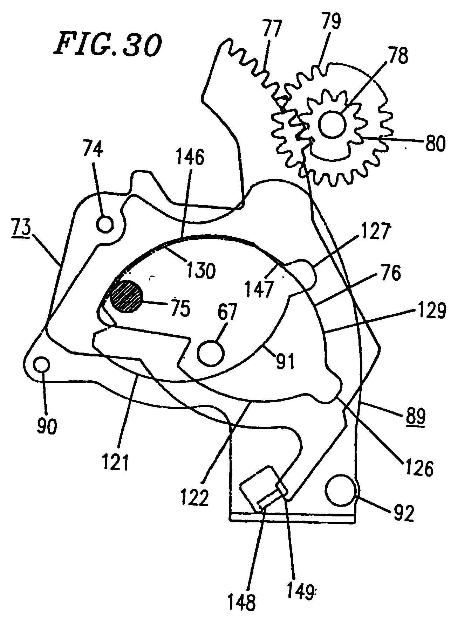

Referring to Figure **30**, the positions of the subchassis drive arm **89** and the boat drive arm **73** are the same as those in the play mode (see Figure **28**) and the stop mode (see Figure **29**), with only the drive pin **75** on the cam gear **66** being moved.

The tension plate **18** does not move from its position in the stop mode, and the positions of the tension arm **12** and the tension band regulating arm **21** are the same as those in the stop mode, as illustrated in Figure **23**.

The pinch drive arm **97** is rotated again in the clockwise direction from the stop mode, as illustrated in Figure **35**, to the same position as in the play mode, as illustrated in Figure **34**, whereby the pinch arm **53** is in the same state as in the play mode. The T4 arm **28** stays in the same state as in the play mode, in the stop mode and in the reverse mode.

An operation of the magnetic recording/reproduction apparatus while recording/reproducing a magnetic tape will now be described with reference to Figure **15**.

Figure **15** illustrates the magnetic recording/reproduction apparatus in a play mode in which functions such as recording, reproduction and fast-forward of the tape can be performed.

During a recording/reproduction operation, the capstan **50** rotates in a forward direction (the counterclockwise direction) at a predetermined speed in a state as illustrated in Figure **15**.

The tape **2** is driven by the pinch roller **55** while being pressed against the capstan so as to be fed from the side of the S reel base **4** toward the T reel base **5**. The rotation of the capstan **50** is transmitted to the T reel base **5** via the timing belt **93**, the two-stage gear **94**, the center gear **10** and the idler gear **7** so as to take up the tape **2** being fed by the capstan **50**, thereby performing the recording/reproduction operation.

In order to pause the reproduction of the tape **2**, the capstan **50** rotating in the forward direction is first stopped.

Then, while the pinch roller **55** is pressing the magnetic tape against the capstan **50**, the capstan **50** is rotated in the reverse direction by a predetermined amount, thereby feeding the tape **2** in the reverse direction.

The reverse rotation of the capstan **50** rotationally biases the idler gear **7** in the counterclockwise direction about the center gear shaft **9**. However, the reverse rotation time T1 of the capstan **50** is too short for the idler gear **7** to mesh with the gear portion provided in the S reel base **4**.

In other words, while the tape **2** is fed in the reverse direction by the reverse rotation of the capstan **50**, the idler gear **7** does not mesh with the gear portion of the S reel base **4**, so that the tape **2** is not taken up by the S reel base **4**, thereby relaxing the tension on a portion of the tape **2** around the cylinder **38**.

Therefore, while reproduction is paused, the tape **2** is wound around the cylinder **38** with relaxed tension and thus is in relaxed contact with the head of the cylinder **38**. During the pause state, it may not be possible to reproduce signals which are magnetically recorded on the tape **2**. However, according to the present embodiment of the present invention, the magnetic recording/reproduction apparatus may include a memory (not shown) for storing signals which are reproduced immediately before the pause operation. Then, the signals reproduced immediately before the pause operation may be retrieved from the memory and, for example, output to an external unit such as a monitor.

As described above, the magnetic recording/reproduction apparatus of the present embodiment of the invention performs the pause operation by stopping the rotation of the capstan **50**, rotating the capstan **50** by a predetermined amount in the reverse direction, and again stopping the rotation, until the reproduction is resumed. Thus, the tension acting upon a portion of the tape **2** around the cylinder **38** is relaxed during the pause state, whereby it is possible to prevent the attachment of a foreign substance onto the head, the seizure and the frozen state of the head which may otherwise occur during the pause state. Herein, the pause operation may be terminated after a predetermined period of time. For example, the tape tension is reduced immediately after the pause operation starts, and this state may be maintained only for a certain period of time, e.g., 4 minutes. Alternatively, the tape tension may be reduced after the pause state is maintained for a certain period of time, e.g., 1 minute.

In order to pause a special reproduction (e.g., a 1/2 speed reproduction, a double speed reproduction), the tension acting upon the magnetic tape can similarly be relaxed until the reproduction is resumed.

The present embodiment of the invention thus provides an advantage of preventing the attachment of a foreign substance onto the head, the seizure and the frozen state of the head which may otherwise occur during the pause state.

Various other modifications will be apparent to and can be readily made by those skilled in the art without departing from the scope and spirit of this invention. Accordingly, it is not intended that the scope of the claims appended hereto be limited to the description as set forth herein, but rather that the claims be broadly construed.

## Claims

1. A magnetic recording/reproduction apparatus for winding a magnetic tape around a rotary head cylinder, having a rotary head, for a predetermined arc, for recording/reproducing the magnetic tape, the magnetic recording/reproduction apparatus comprising:
a capstan shaft for driving the magnetic tape; and
a pinch roller for pressing the magnetic tape against the capstan shaft, wherein:
when the magnetic tape is being reproduced, the capstan shaft is rotated in a forward direction with the pinch roller pressing the magnetic tape against the capstan shaft; and
when a pause operation of pausing the reproduction of the magnetic tape is performed, a tension acting upon the magnetic tape is reduced.

2. A magnetic recording/reproduction apparatus for winding a magnetic tape around a rotary head cylinder, having a rotary head, for a predetermined arc, for recording/reproducing the magnetic tape, the magnetic recording/reproduction apparatus comprising:
a capstan shaft for driving the magnetic tape; and
a pinch roller for pressing the magnetic tape against the capstan shaft, wherein:
when the magnetic tape is being reproduced, the capstan shaft is rotated in a forward direction with the pinch roller pressing the magnetic tape against the capstan shaft; and
a pause operation of pausing the reproduction of the magnetic tape is performed by stopping the rotation of the capstan shaft, rotating the capstan shaft in a reverse direction by a predetermined amount, and then stopping the rotation of the capstan shaft again.
